# EUROPEAN PATENT APPLICATION

(11) **EP 2 395 450 A1**
(43) Date of publication of application: **14.12.2011**
(21) Application number: 10738296.2
(22) Date of filing: 14.01.2010
(51) Int. Cl.: G06F 21/24, G06F 21/20

(54) **INFORMATION MANAGEMENT SYSTEM**

(30) Priority: 06.02.2009 JP 2009025519
(71) Applicant: NEC Corporation, Tokyo 108-8001 (JP)
(72) Inventor: HATAKEYAMA, Makoto, Tokyo 108-8001 (JP)
(74) Representative: Betten & Resch
(86) International application number: PCT/JP2010/000160
(87) International publication number: WO 2010/089952

(57) **Abstract**

An information providing device which provides information, a privilege policy providing device which stores a privilege policy setting whether or not information is allowed to be provided and provides the privilege policy, and an authentication device, are provided. The authentication device includes a privilege information management means for storing privilege information indicating whether or not the privilege policy is allowed be provided by the privilege policy providing device, and a privilege certificate issuance means for issuing a privilege policy certificate including a content of the privilege information. The information providing device includes a privilege policy acquisition means for requesting the privilege policy providing device for the privilege polity based on the privilege policy certificate and acquiring the privilege policy, and an information providing means for providing stored information to another device based on the acquired privilege polity. The privilege policy providing device includes a privilege policy providing means for providing the privilege policy to the information providing device based on the privilege policy certificate.

## Description

### TECHNICAL FIEND

The present invention relates to an information management system, and in particular, to an information management system for managing accesses to information based on set privilege policies.

### BACKGROUND ART

In order to improve information security, setting access privilege to information has been implemented. Non-Patent Document 1 discloses a technology for accessing information based on such access privileges.

Non-Patent Document 1 discloses a standard technical specification, namely ID-WSF (Identity Web Services Framework), for sharing information regarding users among service providers on a network.

As shown in Fig. 1, an attribute information exchange system described in Non-Patent Document 1 includes a WSP (Web Service Provider) 100, a WSC (NVeb Service Consumer) 101, a DS (Discovery Service) 102, and a user agent (software of a user terminal) 103, which are connected over a network. Procedures of retrieval, request, and reply of attribute information using the DS 102, which is a typical operation of the attribute information exchange system of this configuration as descried in Non-Patont Document 1, will be described below.

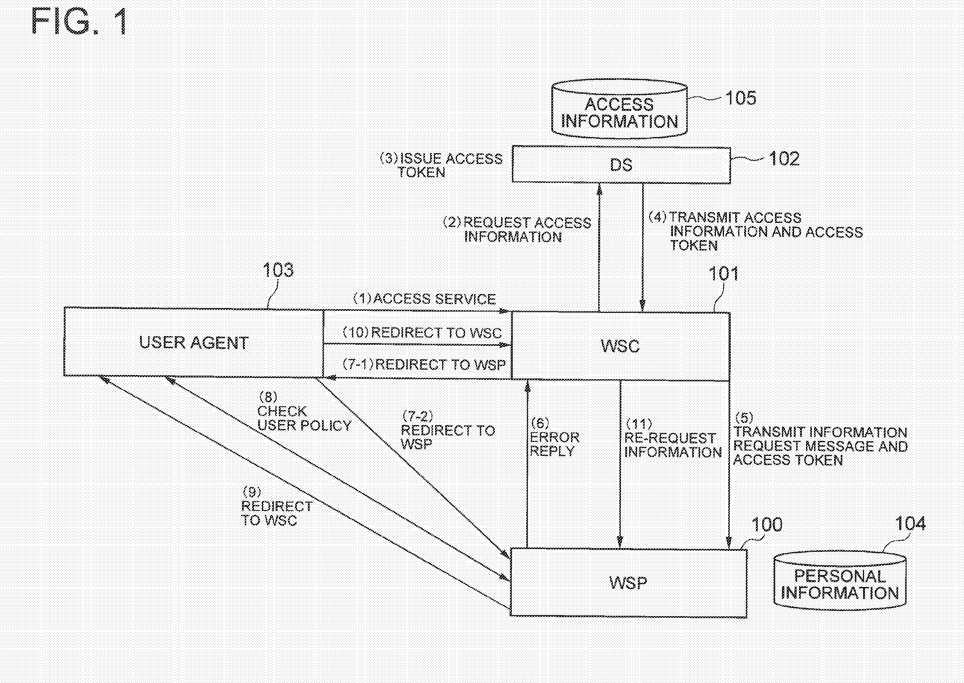

It should be noted that the example shown in Fig. 1 is based on the premise that the WSP 100 has information regarding a user who operates the user agent 103 as personal information, and that the DS 102 has access information 105 for accessing the WSP 100 having the user's attribute information. However, it is assumed that the WSP 100 does not have information for determining accessibility to the attribute information.

First, a user accesses the WSC 101. via the user agent 103 in order to use a restricted service of the WSC 101 (1). Then, the WSC 101 transmit an access information request certificate requesting message to the DS 102 in order to acquire information for accessing the attribute information of the user (2), and acquires an access token and access information 105 issued from the DSD 102 (3), (4). Based on the acquired access information, the WSC 101 transmits a request message for the personal information 104 to the WSP 100 (5).

Meanwhile, the WSP 100 is not able to perform permission determination even if it receives a request from the WSC 101. As such, the WSP 101 transmits an error reply to the WSC 101 (6). Upon receipt of the error reply, the WSC 101 redirects the user agent 101 to the WSP 101 (7-1, 7-2). When the WSP 101 receives an access from the user agent 103, the WSP 101 checks the policy of accessibility .from the user agent 103 (8). After checking the policy of accessibility, the WSP 100 redirects the user agent to the WSC 101 (9).

When the user agent 103 again accesses the WSC 101 (10), the WSC 101 retransmits a request message for attribute information to the WSP 100 (11), At this time, as the WSP 100 has a policy of whether or not to transmit the personal information 104, the WSP 100 is able to perform access determination.

As described above, when the WSP 100 acquires a request for uses attribute information, the WSP 100 is able to perform access determination of attribute information by directly asking the user for permission determination of a policy or the like.

Further, Patent Document 1 disclose a technology of assigning, to another user, access privileges to information. As shown in Fig. 2, a right management system disclosed in Patent Document 1 includes a service providing device 200, a privilege assignee user terminal 201, a privilege assignor user terminal 202, and a right management, device 203. The service providing device 200 includes a right management section 220 and a right acquisition section 210.

The right management system of the above configuration operates as follows. First, when the privilege assignee user terminal 201 accesses the service providing devise 200, the service providing device 200 accesses the right management device 203 to check an access right of the right assignee user terminal 201, At this time, if privileges are set by the privilege assignor user terminal 202, the right management device 203 notifies the right acquisition section 210 in the service providing device 200 of information regarding the privileges (privilege policy). When the right acquisition section 210 acquires right information, the right acquisition section 210 notifies the right management section 220 of such information, and then the right management section 220 determines accessibility of the privilege assignee user terminal 201.

As described above, in the above system, if a device which received a request for an access to stored information does not have a policy indicating whether or not it is allowed to provide the information, the device must create such a policy for determination. As such, the device is required to acquire information for creating the policy from another device.

Patent Document 1: Japan Unexamined Patent Publication No. 2007-334826

Non-Patent Document 1: Liberty Alliance Project, "Liberty Identity Web Services Framework (ID-WSF) V2,0" [online], July 9, 2007, [searched on July 1, 2008], the Internet <URL http://www.projectliberty.org/liberty/resource_center/specifications/liberty_allance_id_wsf_2_0 _specifications_including_errata_v1_0_updates>

### SUMMARY

However, in the above system, if information for creating a policy must be acquired from a plurality of devices, it is necessary to check information and privacy policies set to the respective devices. In that case, items of information for creating the policy are respectively managed by a plurality of devices managing attribute information, along with such attribute information, and the managing methods vary by the devices. As such, it is necessary to request information for creating the policy according to the respective devices. Accordingly, when acquiring information from multiple devices, it is necessary to check the disclosure conditions of the information set in the respective devices, causing a problem that communications are taken with the respective devices each time. As a result, processing for information management becomes complicated, whereby the processing efficiency is lowered.

In view of the above, an object of the present invention is to provide an information management system capable of providing highly useful information while securing the reliability of infom1ation management, and improving the processing efficiency.

In order to achieve the object, an information management system, according to an aspect of the present invention, is adapted to include
an information providing device which provides stored information in response to a request from another device;
a privilege policy providing device which stores a privilege policy seeing whether or not the stored information is allowed to be provided, and provides the privilege policy in response to a request from the information providing device; and
an authentication device which authenticates availability of information, wherein
the authentication device includes a privilege information management means for storing privilege information indicating whether or not the privilege policy is allowed be provided by the privilege policy providing device, and a privilege certificate issuance means for issuing a privilege policy certificate, including a content of the privilege information,
the information providing device includes a privilege policy acquisition means for requesting the privilege policy providing device for the privilege policy based on the privilege policy certificate and acquiring the privilege policy, and an information providing means for providing stored information to another device based on the acquired privilege policy,
the privilege policy providing device includes a privilege policy providing means for providing the privilege policy to the information providing device based on the privilege policy certificate.

Further, according to another aspect of the present invention, an authentication device is adapted to include
a privilege information management means for storing privilege information indicating whether or not a privilege policy is allowed to be provided by a privilege policy providing device which stores the privilege policy setting whether or not stored information is allowed to be provided and provides the privilege policy in response to a request from an information providing device, and
a privilege certificate issuance means for issuing a privilege policy certificate including a content of the privilege information, the privilege policy certificate being referred to when the information providing device requests the privilege policy providing device for the privilege policy and when the privilege policy providing device provides the privilege policy to the information providing device.

Further, according to another aspect of the present invention, a program for an authentication device is adapted to cause an information processing device to realize
a privilege information management means for storing privilege information indicating whether or not a privilege policy is allowed to be provided by a privilege policy providing device which stores the privilege policy setting whether or not stored information is allowed to be provided and provides the privilege policy in response to a request from an information providing device, and
a privilege certificate issuance means for issuing a privilege policy certificate inducing a content, of the privilege information, the privilege policy certificate being referred to when the information providing device requests the privilege policy providing device for the privilege policy and when the privilege policy providing device provides the privilege policy to the information providing device.

Further, according to another aspect of the present invention, a privilege policy providing device is adapted to includes a privilege policy providing means for storing a privilege policy setting whether or not stored information is allowed to be provided, and providing the privilege policy to an information providing device in response to a request from the information providing device which provides stored information in response to a request from another device, wherein
the privilege policy providing means provides the privilege policy to the information providing device based on a privilege policy certificate, the privilege policy certificate being issued by an authentication device which authenticates availability of information and including a content of privilege information indicating whether or not the privilege policy is allowed to be provided.

Further, according to another aspect of the present invention, a program for a privilege policy providing device is adapted to cause an information processing device, which stores a privilege policy setting whether or not stored information is allowed to be provided, to realize
a privilege policy providing means for providing the privilege policy to an information providing device in response to a request from the information providing device which provides stored information in response to a request from another device, wherein
the privilege policy providing means provides the privilege policy to the information providing device based on a privilege policy certificate, the privilege policy certificate being issued by an authentication device which authenticates availability of information and including a content of privilege information indicating whether or not the privilege policy is allowed to be provided.

Further, according to another aspect of the present invention, an information providing device is adapted to include
an information providing means for providing stored information in response to a request from another device; and
a privilege policy acquisition means for requesting a privilege policy providing device for a privilege policy, the privilege policy providing device storing the privilege policy setting whether or not stored information is allowed to be provided and providing the privilege policy in response to a request from an information providing device, wherein
the privilege policy acquisition means requests the privilege policy providing device for the privilege policy to acquire the privilege policy based on a privilege policy certificate, the privilege policy certificate being issued by an authentication device which authenticates availability of information and including a content of privilege information indicating whether or not the privilege policy is allowed to be provided by the privilege policy providing device, and
the information providing means provides stored information to another device based on the privilege policy which is transmitted and acquired based on the privilege policy certificate from the privilege policy providing device.

Further, according to another aspect of the present invention, a program for an information providing device is adapted to cause an information processing device to realize
an information providing means for providing stored information in response to a request from another device; and
a privilege policy acquisition means for requesting a privilege policy providing device for a privilege policy, the privilege policy providing device storing the privilege policy setting whether or not stored information is allowed to be provides and providing the privilege polity in response to a request from an information providing device, wherein
the privilege policy acquisition means requests the privilege police providing device for the privilege policy to acquire the privilege policy based on a privilege policy certificate, the privilege policy certificate being issued by an authentication device which authenticates availability of information and including a content of privilege information indicating whether or not the privilege policy is allowed to be provided by the privilege policy providing device, and
the information providing means provides stored information to another device based on the privilege policy which is transmitted and acquired from the privilege policy providing device based on the privilege policy certificate.

Further, according to another aspect of the present invention, an information management method is adapted to include, in an information providing system including:
an information providing device that provides stored information in response to a request from another device;
a privilege policy providing device that stores a privilege policy setting whether or not the stored information is allowed to be provided, and provides the privilege policy in response to a request from the information providing device; and
an authentication device that authenticates availability of information,
by the authentication device, storing privilege information indicating whether or not the privilege policy is allowed to be provided by the privilege policy providing device, and issuing a privilege policy certificate including a content of the privilege information;
by the information providing device, requesting the privilege policy providing device for the privilege policy based on the privilege policy certificate;
by the privilege policy providing device, providing the privilege policy to the information providing device based on the privilege policy certificate; and
by the information providing device, acquiring the privilege policy from the privilege policy providing device, and providing stored information to another device based on the acquired privilege policy.

As the present invention is configured as described above, the present invention is able to provide an information management system capable of providing highly useful information while securing reliability of information management, and improving processing efficiency.

### BRIEF DESCRIPTION OF DRAWINGS

Fig. 1 is a diagram showing the configuration and the operation of a system disclosed in Non-Patent Document 1.

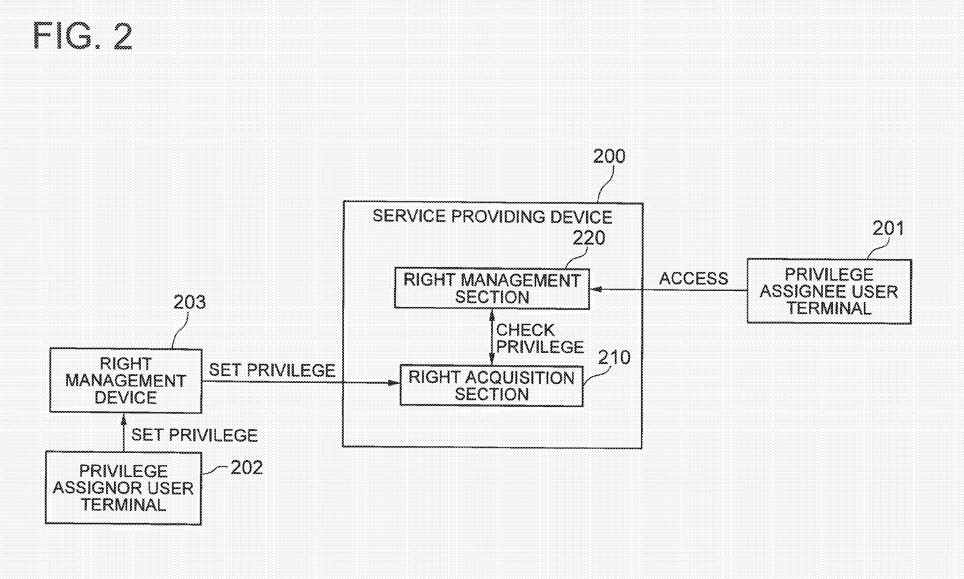

Fig. 2 is a diagram showing the configuration and the operation of a system disclosed in Patent Document 1.
Fig. 3 is a block diagram showing the configuration of a system according to a first embodiment of the present invention.
Fig. 4 is a diagram showing the operation of the system disclosed in Fig. 3.
Fig. 5 is a functional block diagram showing the configuration of the entire system according to a second embodiment of the present invention.
Fig. 6 is a block diagram showing the configuration of the entire system according to the second embodiment of the present invention.
Fig. 7 is a functional block diagram showing the configuration of the authentication device disclosed in Fig. 5.
Fig. 8 is a functional block diagram showing the configuration of the personal information requesting device disclosed in Fig. 5.
Fig. 9 is a functional block diagram showing the configuration of the personal information providing device disclosed in Fig. 5.
Fig. 10 is a functional block diagram showing the configuration of the privilege policy providing device disclosed in Fig. 5.
Fig. 11 is a flowchart showing the operation of the entire system.
Fig. 12 is a flowchart showing the operation of the authentication device.
Fig. 13 is a flowchart showing the operation of the personal information providing device.
Fig. 14 is a flowchart showing the operation of the privilege policy providing device.
Fig. 15 is a functional block diagram showing the configuration of a privilege policy providing device according to a third embodiment of the present invention.
Fig. 16 is a flowchart showing the operation of the privilege policy providing device disclosed in Fig. 15.
Fig. 17 is a diagram showing the configuration and the operation of the entire system according to a fourth embodiment of the present invention.
Fig, 18 is a table showing exemplary privilege information stored in the authentication device disclosed in Fig. 17.
Fig. 19 is a table showing authentication policies stored in the privilege policy providing device shown in Fig. 17.

### EXEMPLARY EMBODIMENTS

### <First Embodiment>

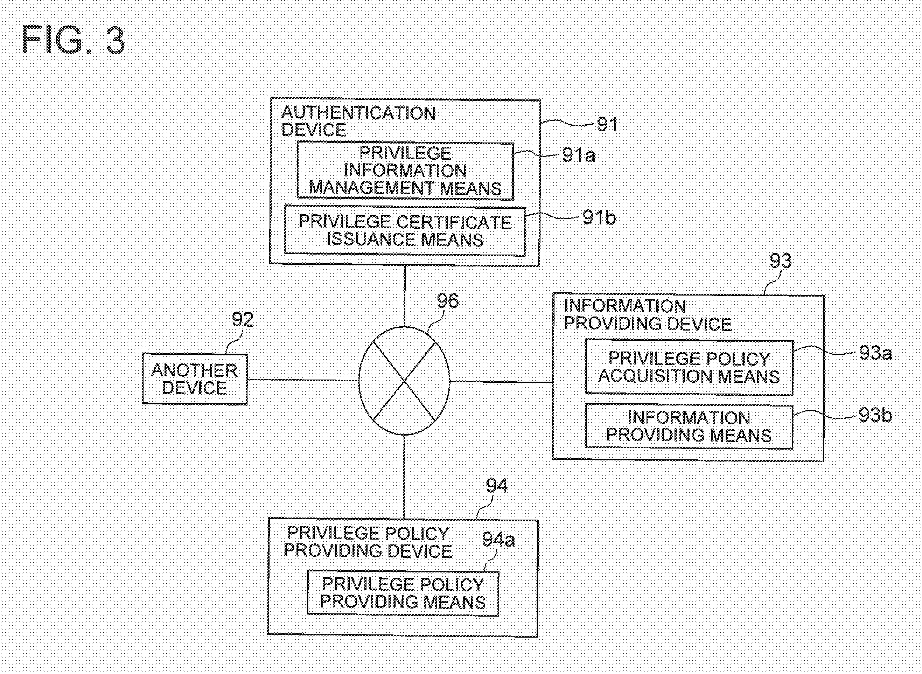

A first embodiment of the present invention will be described with reference to Fig. 3. Fig. 3 is a block diagram showing the configuration of an information management system. In the present embodiment, the outline of the information management system will be described.

As shown in Fig. 3, the information management system according to the present embodiment includes:
an information providing device 93 which provides stored information in response to a request from another device 92,
a privilege policy providing device 94 which stores a privilege policy setting whether or not the stored information is allowed to be provided, and provides the privilege policy in response to a request from the information providing device 93, and
an authentication device 91 which authenticates availability of information.

The authentication device 91 includes a privilege information management means 91a for storing privilege information indicating whether or not the privilege policy is allowed to be provided by the privilege policy providing device 94, and a privilege certificate issuance means 91b for issuing a privilege policy certificate including the content of the privilege information.

Further, the information providing device 93 includes a privilege policy acquisition means 93a for requesting the privilege policy providing device for the privilege policy based on the privilege policy certificate and acquiring the privilege policy, and an information providing means 93b for providing stored information to the other devise 92 based on the acquired privilege policy.
Further, the privilege policy providing device 94 includes a privilege policy providing means 94a for providing the privilege policy to the information providing device 93 based on the privilege policy certificate.

Further, as the above-mentioned other device, the information management system includes an information requesting device which requests the information providing device for information stored in the information providing device. The information requesting device acquires the privilege policy certificate, from the authentication device, and transmits the privilege policy certificate to the information providing device and requests information stored in the information providing device. Further, the privilege certificate issuance means included in the authentication device issues the privilege policy certificate to the information requesting device. Further, the privilege policy acquisition means included in the information providing device is adapted to request the privilege policy providing device for the privilege policy based on the requested content and the transmitted privilege policy certificate from the information requesting device.

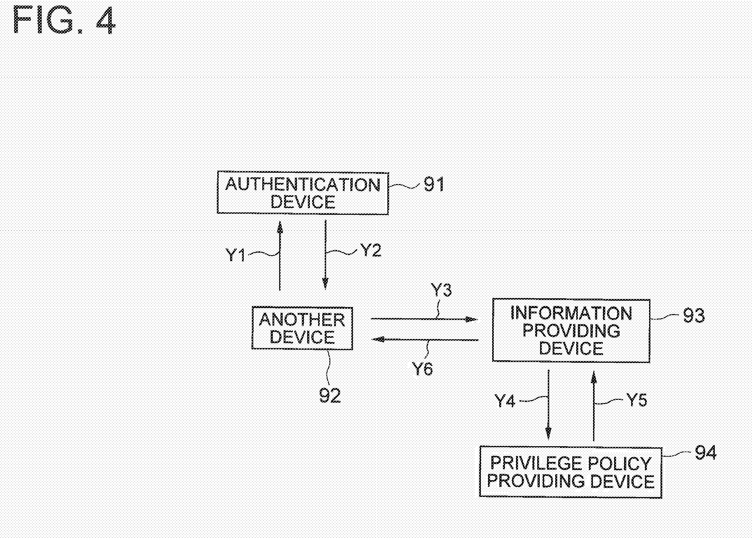

According to the information management system, first, the authentication device 91 stores and manages privilege information in advance which is information indicating whether or not privilege policy information, managed by the privilege policy providing device 94, is allowed to be disclosed (provided). The other device 92, which is an information requesting device, requests the authentication device 91 for predetermined information such as user information, when needed (Y1 in Fig. 4). Then, the authentication device 91 determines whether or not the other device 92 is able to access the privilege policy, transmits privilege information indicating the accessibility to the privilege policy to the other device 92, which is an information requesting device, as a privilege policy certificate (Y2 in Fig. 4). Thereby, the other device 92 acquires the privilege policy certificate indicating the accessibility to the privilege policy, from the authentication device 91. Then, the other device 92 transmits, to the information providing device 93, the acquired privilege policy certificate and a message requesting the information stored in the information providing device 93 (Y3 in Fig. 4).

Then, when the information providing device 93 receives the request for information and the privilege policy certificate from the other device 92, the information providing device 93 checks whether the self device 93 has an access judgment policy regarding an access privilege defining whether it is allowed to disclose the stored information. If the information providing device 93 does not have an access determination policy, the information providing device 93 checks whether the privilege policy certificate describes a privilege policy providing device 94 which is allowed to acquire a privilege policy required for creating an access judgment policy. If it is described, the information providing device 93 transmits the privilege policy certificate to the privilege policy providing devise 94 described in the privilege policy certificate to request a privilege polity (Y4 in Fig. 4). Meanwhile, if it is not described, the information providing device 93 acquires information stored in the intonation providing device 93 and creates an access determination policy based on such information.

the privilege policy providing device 94 (any one of them if there are a plurality of devices) acquires the request for a privilege policy and the privilege policy certificate from the information providing device 93, the privilege policy providing device 94 determines whether or not the privilege policy is allowed to be transmitted, according to the information described in the privilege policy certificate. Then, according to the determination result, the privilege policy providing device 94 transmits an appropriate privilege policy to the information providing device 93 (S5 in Fig. 4). For example, if the privilege policy certificate describes that disclosure of the privilege policy of the requested information is permitted, the privilege policy providing device 94 transmits the privilege policy to the information providing device 93.

In this way, the Information providing device 93 which acquired the privilege policy creates an access determination policy using the acquired privilege policy, and uses the access determination policy to judge whether or not to accept the request for information, and transmits appropriate information to the other device 92 (S6 in Fig. 4). For example, if the acquired privilege policy sets that the requested information is allowed to be disclosed to any devices, the access determination policy also sets the same content. As such, the information providing device 93 disclosed the requested information to the other device 92 requesting such information.

As described above, according to the present embodiment, as the authentication device 91 intensively determiners accessibility to a privilege policy and issues a result thereof as a privilege policy certificate, the information providing device 93 and the privilege polity providing device 94 are able to use it to perform uniform determination. Accordingly, by using the information described in the privilege policy certificate, it is possible to determine an access to the privilege policy, whereby information can be protected appropriately. At the same time, as it is not necessary for the information providing devise 93 to communicate with a plurality of privilege policy providing devises, the number of communications within the entire system can be reduced, whereby the processing efficiency in the entire system can be improved.

Further, in the information management system, the privilege certificate issuance means included in the authentication device is adapted to issue the privilege policy certificate describing information limiting the type of the privilege policy provided by the privilege policy providing devise.

Further, in the information management system, the privilege policy providing means included in the privilege policy providing device is adapted to provide only the privilege policy of the limited type described in the privilege policy certificate, to the information providing device.

Further, in the information management system, the privilege information management means included in the authentication device is adapted to store the privilege information having a content corresponding to the content of the privilege policy stored in the privilege policy providing device.

Further, in the information management system, the privilege certificate issuance means included in the authentication device is adapted to issue an access privilege certificate indicating the availability of information from the information providing device by the other device, along with the privilege policy certificate.

The authentication device constituting the information management system is adapted to include
a privilege information management means for storing privilege information indicating whether or not a privilege policy is allowed to be provided by a privilege policy providing device which stores the privilege policy setting whether or not stored information is allowed to be provided and provides the privilege policy in response to a request from an information providing device, and
a privilege certificate issuance means for issuing a privilege policy certificate including the content of the privilege information, the privilege policy certificate being referred to when the information providing device requests the privilege policy providing device for the privilege policy and when the privilege policy providing device provides the privilege policy to the information providing device.

Further, in the authentication device, the privilege certificate issuance means is adapted to issue the privilege policy certificate describing information limiting the type of the privilege policy provided by the privilege policy providing device.

It should be noted that the authentication device is realized by installing a program for an authentication device into an information processing device. Specifically, a program for an authentication device, which is another aspect of the present invention, is adapted to cause an information processing device to realize
a privilege information management means for storing privilege information indicating whether or not a privilege policy is allowed to be provided by a privilege policy providing device which stores the privilege policy setting whether or not stored information is allowed to be provided and provides the privilege policy in response to a request from an information providing device, and
a privilege certificate issuance means for issuing a privilege policy certificate including the content of the privilege information, the privilege policy certificate being referred to when the information providing device requests the privilege policy providing device for the privilege polity and when the privilege policy providing device provides the privilege policy to the information providing device.

In the program for the authentication devise, the privilege certificate issuance means issues the privilege policy certificate describing information limiting the type of the privilege policy provided by the privilege policy providing device.

Further, the privilege polity providing device constituting the information management system is adapted to include
a privilege policy providing means for storing a privilege policy setting whether or not stored information is allowed to be provided, and providing the privilege policy to an information providing device in response to a request from the information providing device which provides stored information in response to a request from another device, wherein
the privilege policy providing means provides the privilege policy to the information providing device based on a privilege policy certificate, the privilege policy certificate being issued by an authentication device which authenticates availability of information and including the content of privilege information indicating whether or not the privilege policy is allowed to be provided.

Further, in the privilege policy providing devise, based on information limiting the type of the privilege policy described in the privilege policy certificate, the privilege policy providing means provides only the privilege policy of the limited type to the information providing devise.

It should be noted that the privilege policy providing device is realized by installing a program for a privilege policy providing device into an information processing device. Specifically, a grogram for a privilege policy providing device, which is another aspect of the present invention, is adapted to cause an information processing device, which stores a privilege policy setting whether or not stored information is allowed to be provided, to realize
a privilege policy providing means for providing the privilege policy to an information providing device in response to a request from the information providing device which provides stored information in response to a request from another device, wherein
the privilege policy providing means provides the privilege policy to the information providing device based on a privilege policy certificate, the privilege policy certificate being issued by an authentication device which authenticates availability of information and including the content of privilege information indicating whether or not the privilege policy is allowed to be provided.

in the program for the privilege policy providing device, based on information limiting the type of the privilege policy described in the privilege policy certificate, the privilege policy providing means provides only the privilege policy of the limited type to the information providing device.

Further, the information providing device, constituting the information management system, is adapted to include
an information providing means for providing stored information in response to a request from another device, and
a privilege policy acquisition means for requesting a privilege policy providing device for a privilege policy, the privilege policy providing device storing the privilege policy setting whether or not stored information is allowed to be provided and providing me privilege policy in response to a request from an information providing device, therein
the privilege policy acquisition means requests the privilege policy providing device for the privilege policy to acquire the privilege policy based on a privilege policy certificate, the privilege policy certificate being issued by an authentication device which authenticates availability of information and including the content of privilege information indicating whether or not the privilege policy is allowed to be provided by the privilege policy providing device, and
the information providing means provides stored information to another device based on the privilege policy which is transmitted and acquired based on the privilege policy certificate from the privilege policy providing device.

Further, in the information providing device, based on information limiting the type of the privilege policy described in the privilege policy certificate, the privilege policy acquisition means requests the privilege policy providing device only for the privilege policy of the limited type.

It should be noted that the information providing device is realized by installing a program for an information providing device into an information processing device. Specifically, a program for an information providing device, which is another aspect of the present invention, is adapted to cause an information processing device to realize
an information providing means for providing stored information in response to a request from another device, and
a privilege policy acquisition means for requesting a privilege policy providing device for a privilege policy, the privilege policy providing device storing the privilege polity setting whether or not stored information is allowed to be provided and providing the privilege policy in response to a request from an information providing device, whereon
the privilege policy acquisition means requests the privilege policy providing device for the privilege policy to acquire the privilege policy based on a privilege policy certificate, the privilege policy certificate being issued by an authentication device which authenticates availability of information and including the content of privilege information indicating whether or not the privilege policy is allowed to be provided by the privilege policy providing device, and
the information providing means provides stored information to another device based on the privilege policy which is transmitted and acquired from the privilege policy providing device based on the privilege policy certificate,

In the program for the information providing device, based on information limiting the type of the privilege policy described in the privilege policy certificate, the privilege policy acquisition means is adapted to request the privilege policy providing device only for the privilege policy of the limited type.

Further, an information management method, which is another aspect of the present invention, is realized by operation of the information management system in an information providing system including
an information providing device which provides stored information in response to a request from another device;
a privilege policy providing device which stores a privilege police setting whether or not the stored information is allowed to be provided, and provides the privilege polity in response to a request from the information providing device; and
an authentication device that authenticates availability of information.

The method is adapted to include
by the authentication device, storing privilege information indicating whether or not the privilege policy is allowed to be provided by the privilege policy providing device, and issuing a privilege policy certificate including the content of the privilege information,
by the information providing device, requesting the privilege policy providing device for the privilege policy based on the privilege policy certificate,
by the privilege policy providing device, providing the privilege policy to the information providing device based on the privilege policy certificate, and
by the Information providing device, acquiring the privilege polity from the privilege polity providing device, and providing stored information to another device based on the acquired privilege policy.

The information management method is adapted to include that when issuing the privilege policy certificate by the authentication device, issuing the privilege policy certificate describing information limiting the type of the privilege policy provided by the privilege policy providing device, and
when providing the privilege policy to the information providing device by the privilege policy providing device, providing only the privilege policy of the limited type described in the privilege policy certificate.

As even an invention of an authentication device, a program for an authentication device, a privilege policy providing device, a program for a privilege policy providing devise, an information providing device, a, program for an information providing device, or an information management method, having the above configurations, has a similar action to that of the information management system, such an invention is able to achieve the above-described object of the present invention.

### <second Embodiment

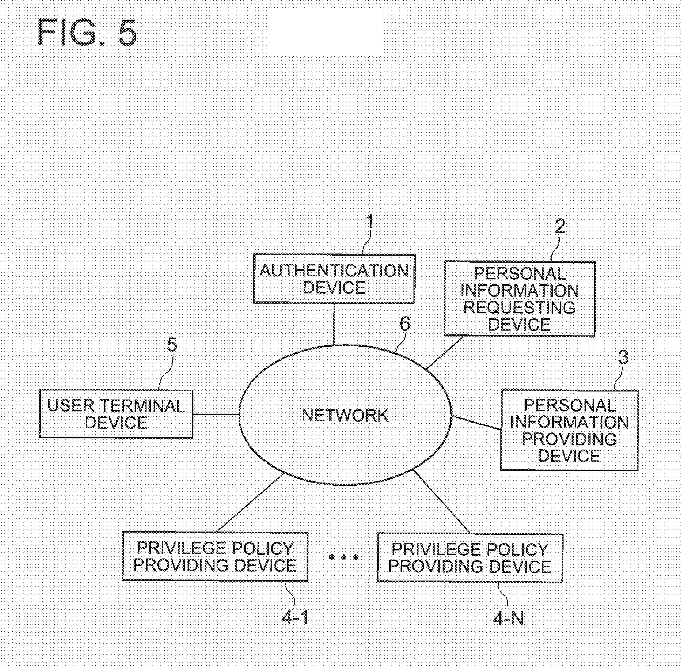

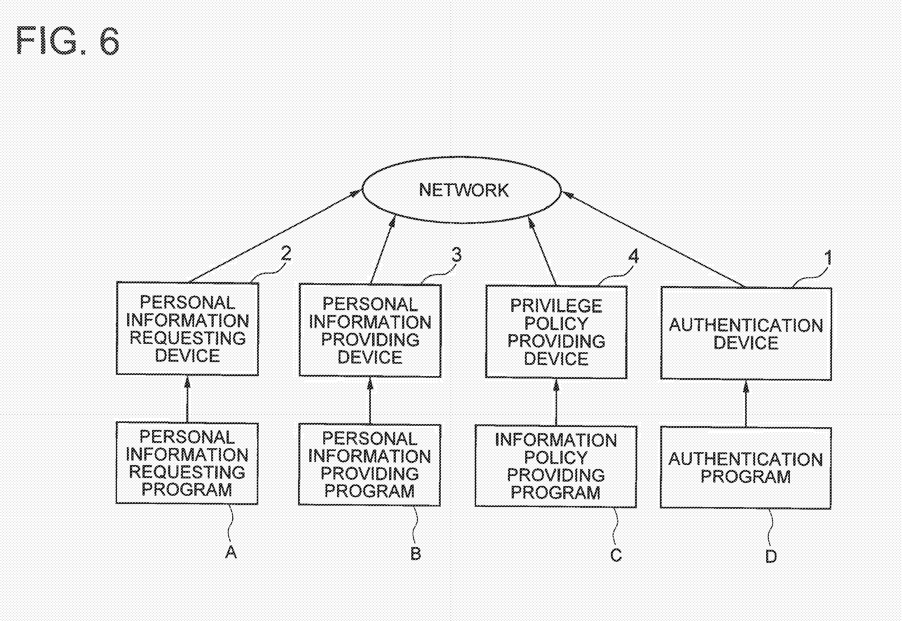

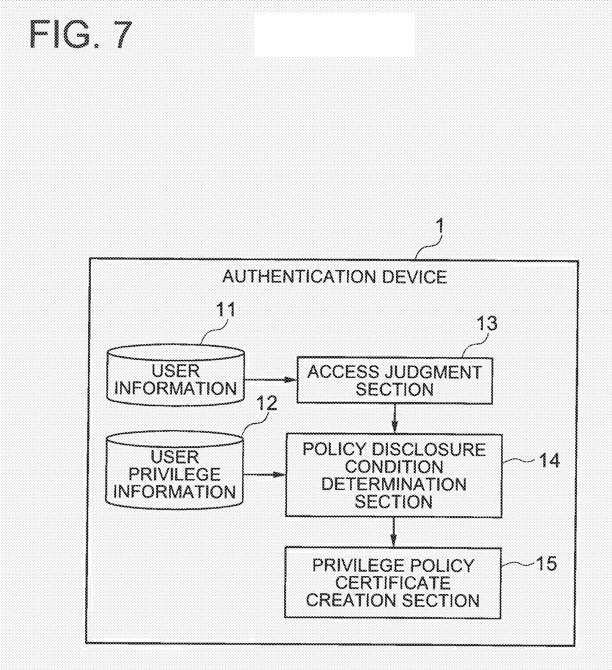

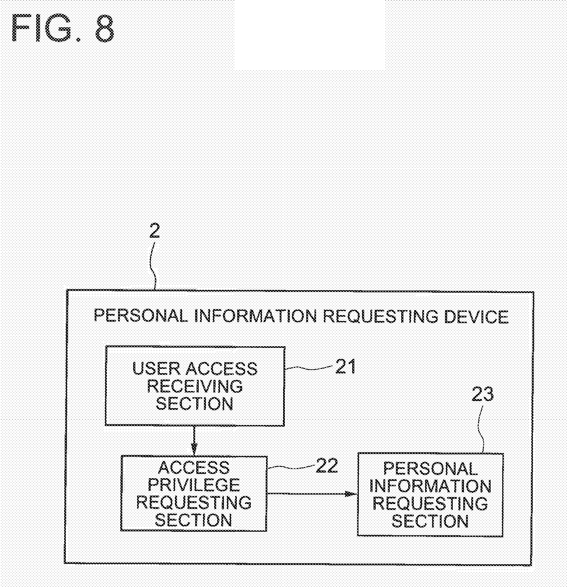

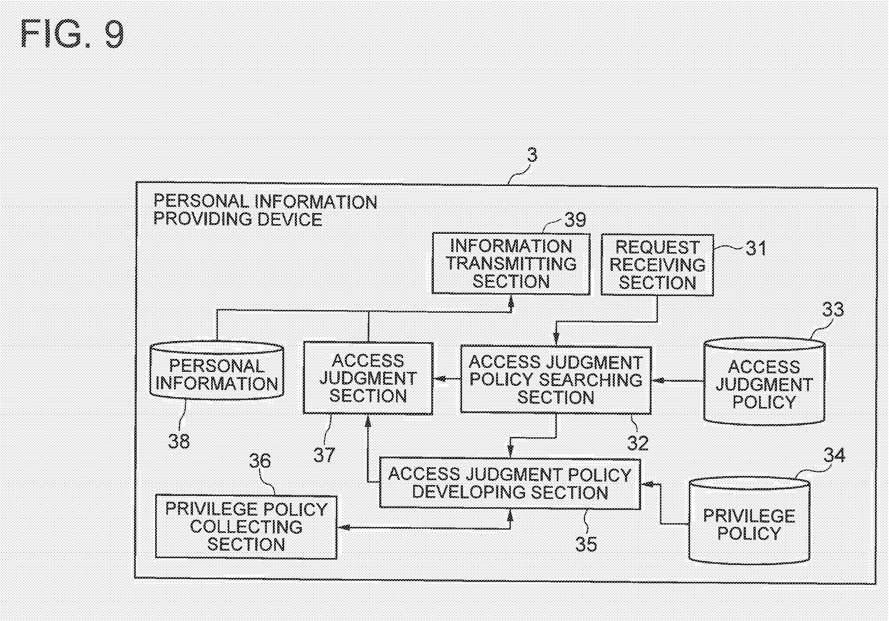

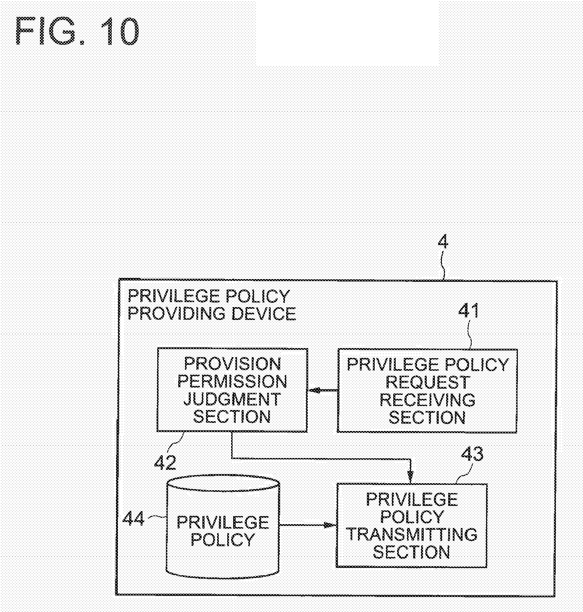

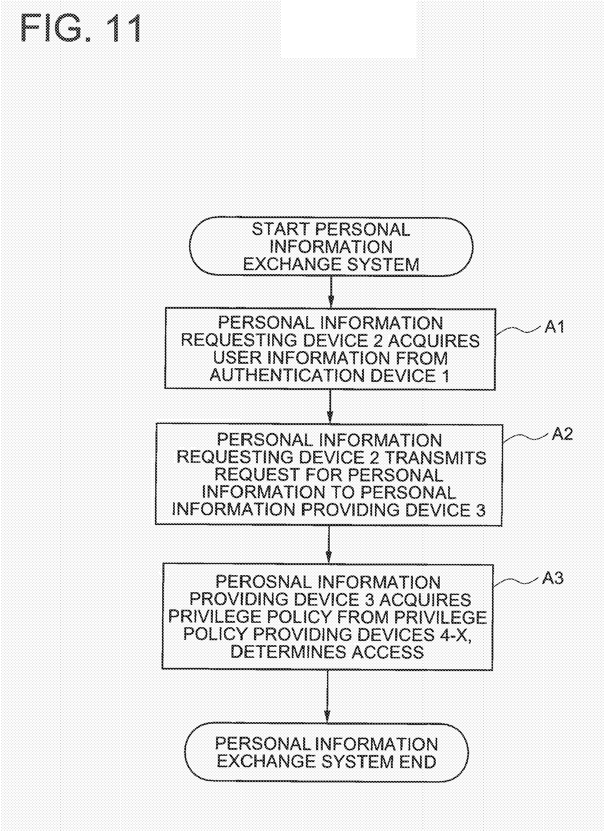

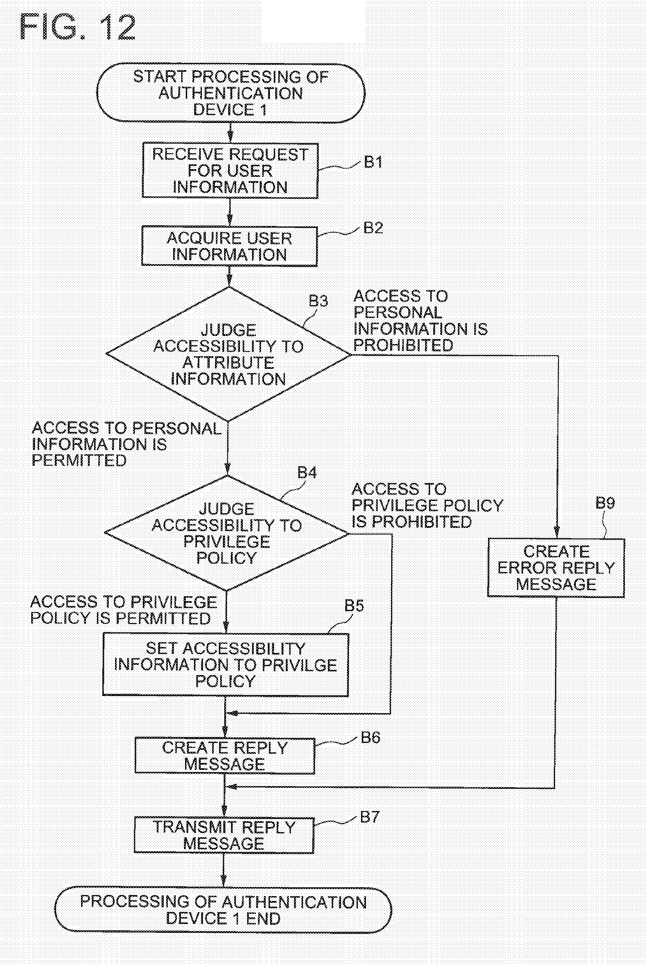

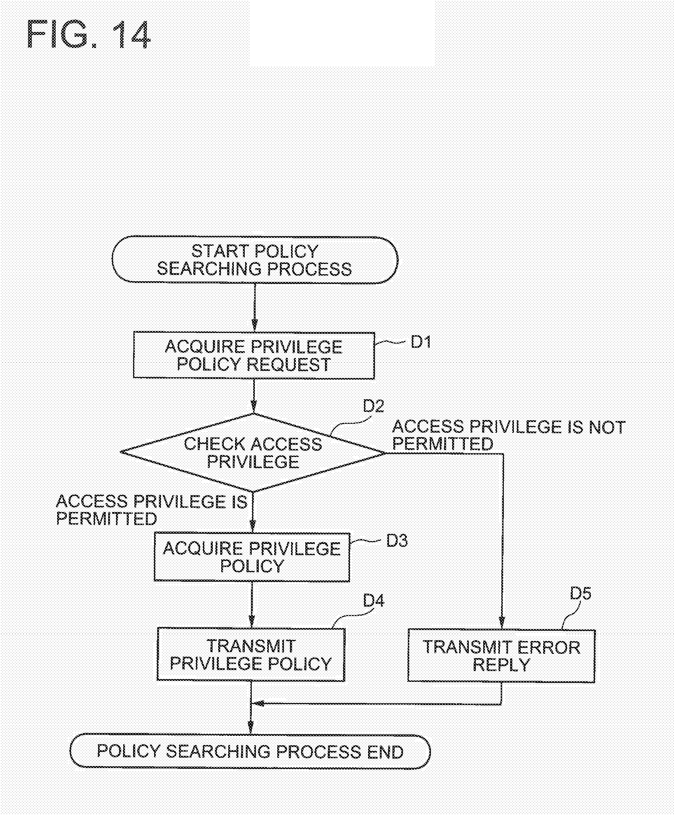

A second embodiment of the present invention will be described with reference to Figs. 5 to 14. Figs. 5 and 6 are functional block diagrams showing the configuration of the entire system of the present embodiment. Fig. 7 is a block diagram showing the configuration of an authentication device. Fig. 8 is a block diagram showing the configuration of a personas information requesting device. Fig. 9 is a block diagram showing the configuration of a personal information providing device. Fig. 10 its a block diagram showing the configuration of a privilege policy providing device. Fig. 11 is a flowchart showing the operation of the entire system. Fig. 12 is a flowchart showing the operation of the authentication device. Fig_{.}13 is a flowchart showing the operation of the personal information providing device. Fig.14 is a flowchart showing the operation of the privilege policy providing device.

It should be noted that the present embodiment shows a specific example of the information management system disclosed in the first embodiment. In the below description, an example is given in which information managed by the system, that is, information provided by the information providing device, is personal information, and a personal information exchange system for providing the personal information to another device is describes. In the present invention, however, information provided by the information providing device is not limited to personal information.

### [Configuration]

As shown in Fig. 5, a personal information exchange system of the present embodiment includes an authentication device 1, a personal information requesting device 2, a personal information providing device 3, privilege policy providing devices 4 (4-1, ..., 4-N), and a user terminal device 5, which are connected over a network 6. The respective devices will be describes in detail bellow.

First, the authentication device 1 will be described. The authentication device 1 is an information processing device having a function of managing authentication and permission information and controlling accesses to privilege policies. As shown in Fig. 7, the authentication device 1 includes user information 11, user privilege information 12, a access judgment section 13, a policy disclosure condition determination section 14, sand a privilege policy certificate creation section 15. It should be noted that such a configuration of the authentication device 1 is realized by installing an authentication program D (program for authentication device) into the information processing device as shown in Fig. 6. The respective components will be described in detail below.

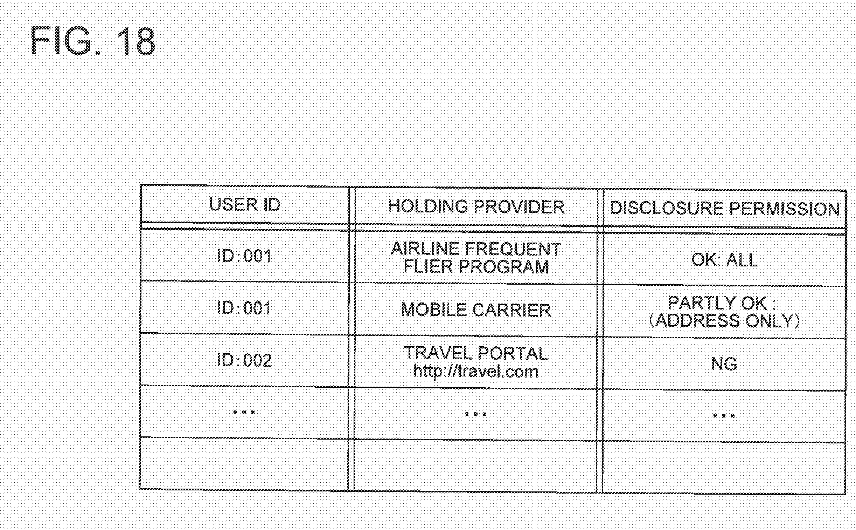

The user information 11 stores information of a user. The user information includes a user identifier (user ID) or user authentication information. Further, the user privilege information 12 (privilege information management means) stores information regarding privilege policies. The information regarding privilege policies means a list of information including the types of privilege policies which are allowed to be disclosed to other devices and devices to which the information is allowed to be disclosed, of the privilege policies held by the privilege police providing device 4 described below. As such, the contents of the privilege information correspond to the contents of the privilege policies stored in the privilege policy providing device 4. Specifically, the privilege information is information shown in Fig. 18, which will be described in a forth embodiment shown below. The privilege information 12 is information registered by the user, for example.

The access judgment, section 13 judges whether or not user information and the privilege information 12 are allowed to be disclosed to another device, when a request for a privilege policy is transmitted from the device (personal information requesting device 2). For example, devices for which the user information and the privilege information 12 are allowed to be disclosed are registered in the authentication device 1 in advance, and based on such information, the access judgment section 13 judges whether or not to permit the requesting device to access personal information.

The policy disclosure condition determination section 14 selects information regarding the privilege policy which is allowed to be disclosed to other devices. For example, the polity disclosure condition determination section 14 only selects a privilege policy which is set to the user corresponding to the requested user information.

The privilege policy certificate creation section 15 (privilege certificate issuance means) creates a privilege policy certificate to be transmitted to another device, based on the information selected by the policy disclosure condition determination section 14, The privilege policy certificate describes access control information to the privilege policy. As such, as described above, the privilege policy certificate describes a list of information including the type of privilege polity which is allowed to be disclosed to another device and devices to which the policy is allowed to be disclosed, of the privilege policies held by the privilege policy providing device 4.

It should be noted that when creating the privilege policy certificate, the privilege policy certificate creation section 15 may simultaneously issue an access certificate (access privilege certificate) regarding access control information to personal information, based on the user information 11. This means that if the access judgment section 13 judges that it is allowed to disclose personal information to the personal information requesting device 2 requesting the disclosure, the privilege policy certificate creation section 15 issues an access certificate indicating the judgment The access certificate is used when the personal information providing device 3 judges whether or not to provide personal information.

Next, the personal information requesting device 2 (information requesting device (another device)) will be described. The personal information requesting device 2 is an information processing device having a function of acquiring a privilege policy certificate from the authentication device 1, transmitting the privilege policy certificate and a message requesting personal information to the personal information providing device 3, thereby acquiring the personal information. As shown in Fig. 8, the personal information requesting device 2 includes a user access receiving section 21, an access privilege requesting section 22, and a personal information requesting section 23. This configuration of the personal information requesting device 2 is realized by installing a personal information requesting program A into the information processing device, as shown in Fig. 6.

Specifically, the user access receiving section 21 receives an access from the use terminal device 5, and provides some information such as a service to the user. When the user access receiving section 21 needs personal information of the user in order to provide some information to the user, the access privilege requesting section 22 requests the authentication device 1 for the personal information, and along with it, also requests and acquires a privilege policy certificate. At this time, the access privilege requesting section 22 may acquire the access privilege certificate from the authentication device 1. Further, the personal information requesting section 23 creates a personal information requesting message, and transmits it along with the privilege policy certificate acquired by the access privilege requesting section 22, to the personal information providing device 3.

Next, the personal information providing device 3 (information providing device) will be described. The personal information providing device 3 manages personal information, and has a function of receiving a request for personal information and transmitting a privilege policy certificate to a privilege policy providing device thereby acquiring the privilege policy. The personal information providing device 3 also has a function of developing an access policy with respect to personal information based on the acquired privilege policy, and providing the managed personal information to another device.

As shown in Fig. 9, the personal information providing device 3 includes a request receiving section 31, an access judgment policy searching section 32, an access judgment policy 33, a privilege policy 34, an access judgment policy developing section 35, a privilege policy collecting section 36, an access judgment section 37, personal information 38, and an information transmission section 39. It should be noted that this configuration of the personal information providing device 3 is realized by installing a personal information providing program B into an information processing device, as shown in Fig. 6.

Specifically, the request receiving section 31 acquires a personal information requesting message and a privilege policy certificate from another device. At this time, the request receiving section 31 may acquire only an access privilege certificate. Only when acquiring an access privilege certificate, the request receiving section 31 may perform a process,described blow, to determine whether or not to actually provide personal information.

The access judgment policy searching section 32 judges whether or not the personal information providing device 3 has the access judgment policy 33 corresponding to the personal information requesting message acquired by the request receiving section 31. It should be noted that the access judgment policy 33 stores an access judgment policy which is a condition for judging whether or not the personal information 38 is allowed to be provided to another device.

The privilege policy 34 is a privilege policy set to the privilege policy providing device 4, which is acquired from the privilege policy providing device 4, and is information to be refereed to when newly creating an access judgment policy. The information to be referred to includes access history of a user who is the subject of personal information and an access judgment policy which is an information disclosure condition having been set in another device (privilege policy providing device 4).

The access judgment policy developing section 35 uses the acquired privilege policy to create a new access judgment policy, if there is no access judgment policy in the information providing device 3.

The privilege policy collecting section 36 (privilege policy acquisition means) creates a message for requesting a privilege policy, and transmits the message to the privilege polity providing devices 4-1, ... 4-N, along with the privilege policy certificate acquired by the request receiving section 31. At this time, the privilege policy collecting section 36 sets the privilege policy providing device 4 to which the privilege policy is requested, according to the content described in the privilege policy certificate. For example, the privilege policy collecting section 36 transmits a message requesting a privilege policy and the privilege policy certificate only to the privilege policy providing device 4 which is allowed to disclose a privilege policy of the personal information type requested by the personal information requesting device 2. However, the privilege policy collecting section 36 may request any privilege policy providing device 4 for a privilege policy. The privilege policy collecting section 36 stores and holds the privilege policy 34 acquired from the requested privilege policy providing device 4.

In this embodiment, an "privilege policy" assumed in the present invention is information which is referred to for creating an access judgment policy describing the rule according to which the personal information providing device 3 judges whether or not to provide personal information to another device (personal information requesting device 2) in response to a request for the personal information. Accordingly, the rule set in the privilege policy may directly be used as an access judgment policy.

The access judgment section 37 judges whether or not the personal information 39 is allowed to be provided to the personal information requesting device 2 which transmitted a personal information requesting message, based on the access judgment policy. It should be noted that the personal information 38 is information regarding the subject who operates the user terminal device 5. The information transmission section 39 transmits the personal information 38 to the personal information requesting device 2, based on the judgment result by the access judgment section 37. This means that the access judgment section 37 and the information transmission section 39 cooperatively function as an information providing means.

Next, the privilege policy providing device 4 will be described. The privilege policy providing device 4 has a function of providing a privilege policy, which is a rule for judging whether or not to disclose the information set in the self device, to another device (personal information providing device 3). As shown in Fig. 10, the privilege policy providing device 4 includes a privilege policy request receiving section 41, a provision permission judgment section 42, a privilege policy transmission section 43, and a privilege policy 44. It should be noted that this configuration of the privilege policy providing device 4 is realized by installing a privilege policy providing program C into an information processing device, as shown in Fig. 6.

Specifically, the privilege policy request receiving section 41 acquires a message requesting a privilege policy and a privilege policy certificate from the personal information providing device 3. Then, the provision permission judgment section 42 verifies the content described in the privilege policy certificate, and judges whether or not the privilege policy is allowed to be transmitted to the personal information providing device 3. For example, if the privilege policy certificate describes that the privilege policy corresponding to the user information of the requested type is allowed to be disclosed, the provision permission judgment section 42 judges to provide the privilege policy.

Further, the privilege policy transmission section 43 (privilege policy providing means) transmits the privilege policy to the personal information providing device 3 based on the result of the provision permission judgment section. It should be noted that the privilege policy 44 is information regarding an access privilege held by the privilege policy providing device 4 itself. This information is information for creating an access judgment policy to determine whether or not a request for personal information is allowed, rather than information to be used for determining whether or not a request for personal information is allowed by the personal information providing device 3 itself.

It should be noted that as shown in Fig. 6, the respective programs A, B, C, and D are provided to the respective devices 2, 3, 4, and 1 in a state of being stored in a storage medium such as a CD-ROM. Alternatively, the respective programs A, B, C, and D may be stored in a storage device of another server computer on the network and provided to the respective devices 2, 3_{,} 4, and 1 from the server computer over the network.

### [Operation]

Next, operation of the system will be described in derail with reference to the flowcharts of Figs. 11 to 14, First, the flow of the overall processing performed among the respective devices will be described with reference to Fig. 11.

First, when the personal information requesting device 2, accessed by the user terminal device 5, needs personal information, the access privilege requesting section 22 of the personal information requesting device 2 requests the authentication device 1 for information regarding the user for acquiring personal information, and acquires a privilege policy certificate from the authentication device 1 (step A1). At this time, the authentication device 1 may transmit not only the privilege policy certificate but also an access privilege certificate, describing whether or not the personal information requesting device 2 is allowed to acquire the personal information, together with the privilege policy certificate to the personal information providing devise 2. The processing performer by the authentication device 1 will be described in detail below.

Then, the personal information requesting section 23 of the personal information requesting device 2 creates a personal information requesting message, and transmits the message and the acquired certificate to the personal information providing device 3 (step A2). Then, the personal information providing device 3 determines whether or not a request for personal information is allowed. At that time, the personal information providing device 3 may acquire a privilege policy from other privilege policy providing devices (4-1, ... 4-N) (step A3). Processing performed by the personal information providing device 3 and by a privilege policy providing device 4-X (X is a value satisfying 1≤X≤N) will be described in detail below. When the personal information providing device 3 determines that it is allowed to provide stored personal information in response to a request for personal information, the personal information providing device 3 provides the personal information to the personal information requesting device 2.

Next, the processing performed by the authentication device 1 at step A1 in Fig. 11 will be described in detail using Fig. 12. First, the access judgment section 13 of the authentication device 1 receives a request for information regarding the user from the personal intonation requesting device 2 (step B1). Then, the access judgment section 13 searches the user information 11 to acquire information regarding an access to the personal information (step B2). Based on the information regarding an access to the personal information, the access judgment section 13 judges whether or not to permit an access to the personal information (step B3). If the access judgment section 13 permits an access, the access judgment section 13 may issue an access privilege certificate describing the access privilege.

If an access by the personal information requesting device 2 is permitted, the privilege policy disclosure condition determination section 14 refers to the privilege information 12 of the user to judge whether or not the personal information providing devise 3 holding the personal information is allowed to acquire a privilege policy from the privilege policy providing devices 4-1, .. 4-N (step B4). For example, the privilege policy disclosure condition determination section 14 judges whether or not there is a privilege policy providing device 4 disclosing a privilege policy corresponding to the requested type of personal information. If the privilege policy is available, the privilege policy certificate creation section 15 creates a privilege policy certificate (step B5).

Then, the privilege policy certificate generation device 15 creates a reply message (step B6), and transmits it to the personal information requesting device 2 along with the privilege policy certificate (step B7). If it is judged at step B4 that an access to the privilege policy is not permitted, a reply message is created without creating a privilege certificate. Further, if an access to the personal information is not permitted at step B3, the access judgment section 13 creates an error message (step B8), and creates a reply message.

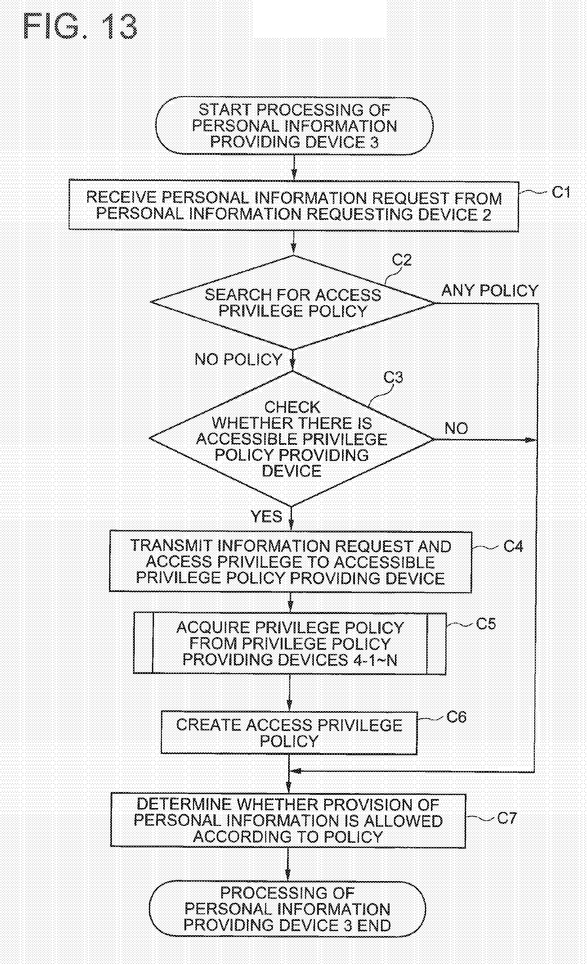

Next, details of the processing performed by the personal information providing device 3 at step A3 in Fig. 11 will be described in detail with reference to Fig. 13. First, the request receiving section 31 of the persona! information providing device 3 receives a request for personal information and a privilege certificate from the personal information requesting device 2 (step C1). At this time, the information received by the request receiving section 31 may include an access privilege certificate. It is possible that only when the access privilege certificate is received, personal information is provided to the personal information requesting device 2 in response to a request, as shown below.

Then, the access judgment policy searching section 32 judges whether or not there is an access judgment policy 33 corresponding- to the request for personal information (step C2). If there is no access judgment policy 33, the access judgment policy developing section 35 checks the acquired privilege policy certificate and judges whether or not a privilege policy can be acquired from another device, namely the privilege policy providing device 4 (step C3).

If there is a privilege policy providing device 4 from which a privilege policy can be acquired, the privilege policy collecting section 36 creates a privilege policy certificate and a request message describing a request for a privilege policy, and transmits them to a plurality of or one privilege policy providing device 4-X (X represent a value satisfying 1≤X≤N) (step C4). Then, the privilege policy collecting section 36 acquires the privilege policy from the privilege policy providing device 4-1,... 4-N (step C5). The details of the processing performed by the privilege policy providing device 4-1, ... 4-N at this step will be described later.

Then, the access judgment, policy developing section 35 acquires the privilege policy 34 which was acquired from the privilege policy providing device 4 and held by the personas information providing device 3 itself, and generates a new access judgment policy (step C6). Then, the access judgment section 37 judges whether or not disclosure of the personal information 38 is allowed based on the generated access judgment policy, and the information transmission section 39 creates a reply message and transmits it to the personal information requesting device 2 (step C7),

Next, details of the processing performed by the privilege policy providing device 4-X (X represents a value satisfying 1≤X≤N) at step A3 in Fig. 11 and step C5 in Fig. 3 will be described using Fig. 14. In the following description, a reference numeral 4 is used as an example of the privilege policy providing device.

First, the privilege policy request receiving section 41 receives a privilege policy certificate and a privilege policy requesting message from the personal information providing device 3 (step D1 in Fig. 9). Next, the provision permission judgment section 42 verifies the privilege policy certificate to judge whether or not the privilege policy is allowed to be provided (step D2). For example, if the requested privilege policy is described in the privilege policy certificate, the provision permission judgment section 42 judges that the policy is allowed to be provided.

If the policy is allowed to be provided, the privilege policy 44 is acquired (step D3), and the privilege policy transmission suction 43 transmits the privilege policy to the personal information providing device 3 (step D4). If the privilege policy is not allowed to be transmitted at step D2, the provision permission judgment section 42 develops an error reply, and the privilege policy transmission section 43 transmits the error reply (step D5).

As described above, according to the present embodiment, as the authentication device 1 intensively determines accessibility to a privilege policy and issues a result as a privilege policy certificate, the information providing device 3 and the privilege policy providing device 4 can use it to perform uniform determination. Accordingly, by using the information described in the privilege policy certificate, it is possible to determine an access to the privilege policy whereby information can be protected appropriately. At the same time, as it is not necessary for the information providing device 3 to communicate with a number of privilege policy providing devices, the number of communications within the entire system can be reduced, whereby the processing efficiency in the entire system can be improved. As such, it is possible to provide an information management system capable of providing highly useful information while securing the reliability of information management, and improving the processing efficiency.

### <Third Embodiment>

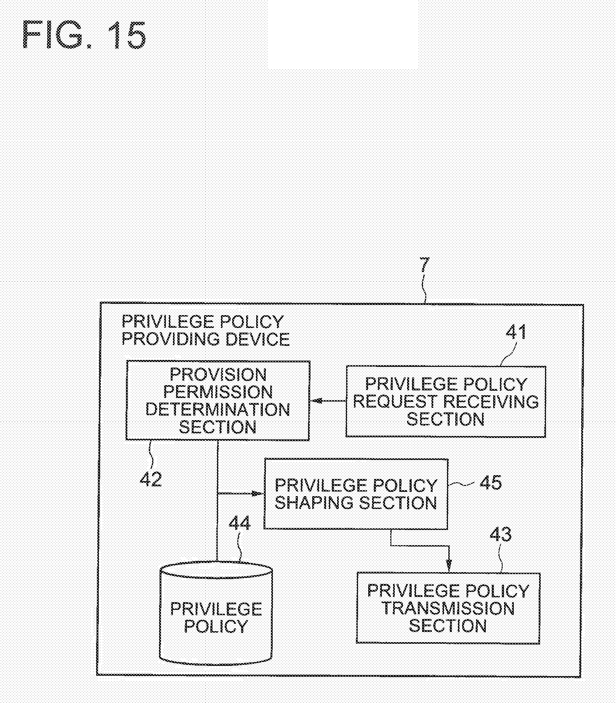

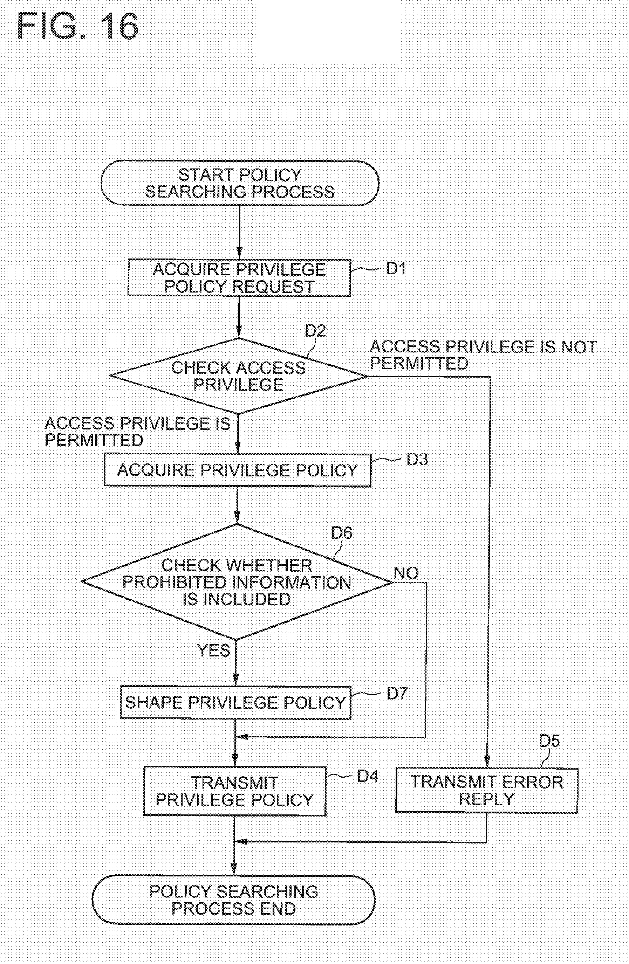

Next, a third embodiment of the present invention will be described with reference to Fig. 15 and 16.

### [Configuration]

As shown in Fig. 15, a privilege policy providing device 7 of the present embodiment differs from the privilege policy providing device 4 of the second embodiment in that the privilege policy providing device 7 also includes a privilege policy shaping section 45 in addition to the configuration of the privilege policy providing device 4. It should be noted that the privilege policy providing device 7 is realized by installing a privilege policy providing program into an information processing device.

Further, corresponding to such a configuration, the authentication device 1 of the present embodiment includes privilege information 12 which defines not only whether or not disclosure of a privilege policy is allowed but also the type of privilege policy which is allowed to be disclosed. Accordingly, a privilege policy certificate also describes the type of privilege policy which is allowed to be disclosed. Such a privilege policy certificate is issued from the authentication device 1.

If the content described in the privilege policy certificate limits the type of privilege policy allowed to be disclosed, the privilege policy shaping section 45 deletes part of the content described in the privilege policy in order to satisfy the condition so as to limit the content of the privilege policy to be transmitted to the personal information providing device 3, As the other component are almost similar to those of the second embodiment, description of the details thereof is not repeated.

### [Operation]

Next, operation of the privilege policy providing device 7 will be described with reference to the flowchart of Fig, 16. As the operation of the entire system is almost similar to that of the second embodiment, description of the details thereof is not repeated.

First, the privilege policy request receiving section 41 acquires a privilege policy certificate and a privilege policy requesting message from the personal information providing device 3 (step D1). Next, the provision permission judgment section 42 verifies the privilege policy certificate to judge whether or not the privilege policy is allowed to be provided (step D2). If the policy is allowed to be provided, the provision permission judgment section 42 acquires the privilege policy 44 (step D3), and transmits the privilege policy (step D4). It should be noted that the processing performed at steps D1, D2, and D3 is the same as that performed by the privilege policy providing device in the first embodiment.

Meanwhile, the privilege policy shaping section 45 judges whether it has a privilege policy which is not allowed to be disclosed, according to the information described in the privilege policy certificate (step D6). If there is one, the privilege policy shaping section 45 shapes the information of the privilege policy, deletes information which is not hallowed to be disclosed (step D7), and transmits the shaped privilege policy (step D4). This means that the privilege policy shaping section 45 only transmits the privilege policy, disclosure of which is defined in the privilege policy certificate, to the information providing device 3. If there is not privilege policy which is not allowed to be disclosed, the privilege policy shaping section 45 transmits the privilege policy as it is (step D4), as described above. If the privilege policy cannot, be transmitted at step D2, the provision permission judgment section 42 develops an error reply, and the privilege policy transmission section 43 transmits the error reply (step D5).

### <Fourth Embodiment>

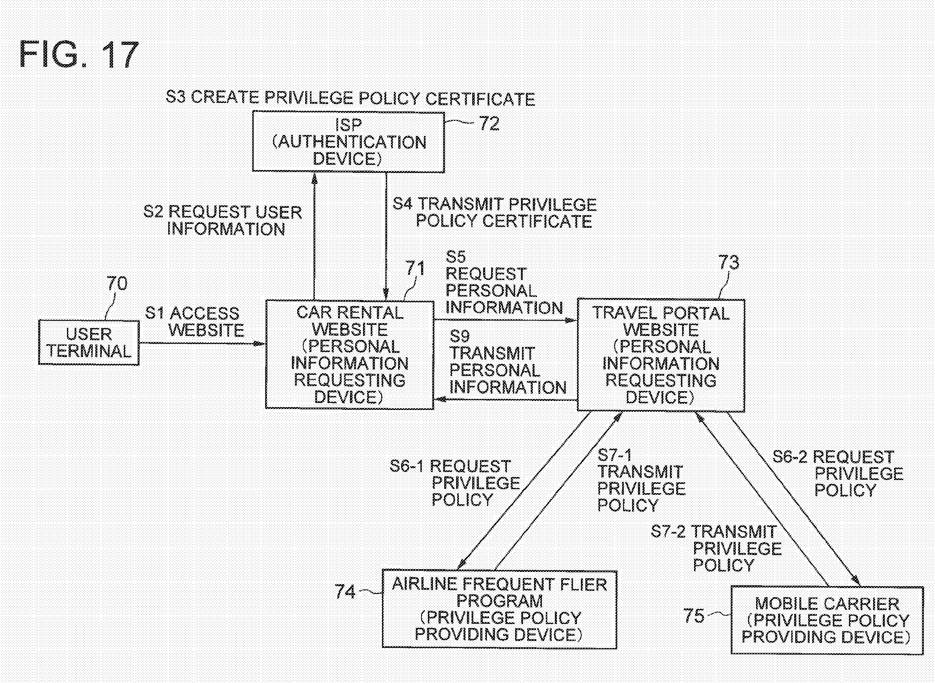

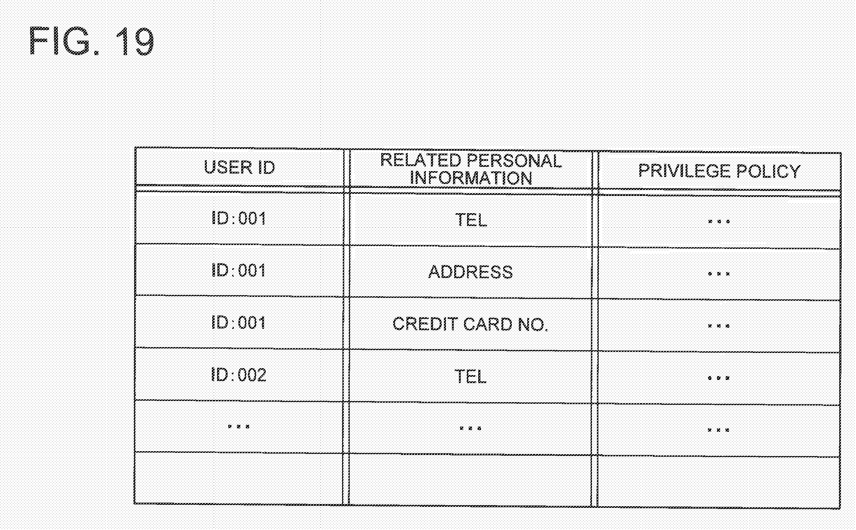

Next, a fourth embodiment of the present invention will be described with reference to Figs. 17 to 19. Fig. 17 is a diagram showing the configuration and the operation of the entire system according to the resent embodiment. Fig. 18 shows exemplary privilege information stored in the authentication device, Fig. 19 shows exemplary privilege policies stored in the privilege policy providing device. It should be noted that the present embodiment is a specific example of the system disclosed in the first, second, and third embodiments.

### [Configuration]

As shown in Fig. 17, the present embodiment includes an intermet service provider (ISP) 72 which manages information regarding users and provides it to other devices on the internet, as the authentication device 1. The present embodiment also includes a car rental website 71 as the personal information requesting device 2, and a travel portal website 73 as the personal information providing device 3. Further, the present embodiment also includes an airline frequent flier program 74 and a mobile carrier 75 as privilege policy providing devices 4-X. The present embodiment also includes a user terminal device 70 which receives services over a network.

In the present embodiment, a user uses a service provided by the car rental website 71 via the user terminal device 70. When using the service, personal information held by the travel portal website 73 is used. The car rental website 7 acquires contact information of the user such as an address and a telephone number held by the travel portal website 73.

In this case, as the travel portal website 73 does not have a policy regarding an access privilege with respect to a request for personal information, that is, a policy indicating whether or not disclosure of the stored personal information is allowed, the travel portal website 73 acquires a privilege policy from the airline frequent flier program 74 and the mobile carrier 75 and generates a policy regarding an access privilege, that is, whether or not the personal information is disclosed. Further, in the present embodiment, the ISP 72 has, in advance, information (privilege information) regarding disclosure of the privilege policy to the airline frequent flier program 74 and the mobile carrier 75. This information is assumed to be set beforehand by the user, Description will be given below when the car rental website 71 acquires personal information from the travel portal website 73 in this situation.

### [Operation]

First, a user (user ID: 001, for example) accesses a service of the car rental website 71 via the user terminal device 70 to reserve a rental car (step S1). At this time, the car rental website 71 needs contact information such as an address and a telephone number. As such, the car rental website 71 requests the ISP 72 for information for acquiring such information (step S2).

When the ISP 72 receives the request, a privilege policy certificate creation section (see reference numeral 15 in Fig. 7) creates a privilege policy certificate based on the stored privilege information (see reference numeral 12 in Fig. 7)of the user (step S2). Fig. 18 shows exemplary privilege information of the user. In this example, it is assumed that the user of ID: 001 has registered that every privilege policy of the airline frequent flier program 74 is available, and regarding the privilege policy of the mobile carrier, only an address is available. This information is described in the privilege policy certificate. Then, the ISP 72 transmits the privilege policy certificate to the car rental website (step S4).

Then, the car rental website 71 creates a request message for personal information (address and telephone number) using the personal information requesting section 23, and transmits it to the travel portal website 73 along with the acquired privilege policy certificate (step S5). As the travel portal website 73 does not have an access judgment policy (see reference numeral 34 in Fig. 9) regarding accessibility to personal information, the privilege policy collecting section (see reference numeral 36 in Fig. 9) checks the privilege policy certificate and creates a request for a privilege policy. At this step, it is also possible to specify the privilege policy providing device having a privilege policy in which the required personal information (address and telephone number) is allowed to be disclosed.

Then, the travel portal website 73 transmits the privilege policy request, and the privilege policy certificate to the airline frequent flier program 74 and the mobile carrier 75 which are described in the privilege policy certificate (steps S6-1 and S6-2). It should be noted that it is also possible to transmit only to the specified device, as described above. Then, the airline frequent flier program 74 and the mobile carrier 75 check the privilege policy certificate using a provision permission judgment section (reference numeral 42 in Fig. 10), and transmits only the privilege policy which is allowed to be discloses to the travel portal website 73 (steps S7-1 and S7-2).

In this example, it is assumed that the mobile carrier 75 has a privilege policy (see reference numeral 44 in Fig. 10), as shown in Fig. 19. When the privilege policy shaping section (reference numeral 45 in Fig. 15) of the mobile carrier 75 collates the privilege policy with the privilege policy certificate describing the information shown in Fig. 18, the mobile carrier 75 determines that only a privilege policy regarding the address of the user of ID: 001 is allowed to be transmitted. In that case, the privilege policy transmission section (reference numeral 43 in Fig. 15) transmits only the privilege policy regarding the address to the travel portal website 73.

Then, the access judgment policy development section (reference numeral 35 in Fig. 7) of the travel portal website 73 creates a new access judgment policy according to the privilege policy collected by the travel portal website 7. Then, based on the access judgment policy, the access judgment section (reference numeral 37 in Fig. 9) judges whether or not personal information is allowed to be disclosed to the car rental website 71 (step S8). For example, if the collected privilege policy has a content in which an address and a telephone number are allowed to be disclosed, such a content is directly rejected on the access judgment policy. In that case, the travel portal website 73 provides the stored personal information such as an address and a telephone number to the car rental website 71 (step S9).

As described above, according to the present embodiment, as the authentication device intensively determines accessibility to a privilege policy and issues a result as a privilege policy certificate, the information providing device and the privilege policy providing device can use it to perform uniform determination. Accordingly, by using the information described in the privilege policy certificate, it is possible to determine an access to the privilege policy, whereby information can be protected appropriately, At the same time, as it is not necessary for the information providing device to communicate with a number of privilege policy providing devices, the number of communications within the entire system can be reduced, whereby the processing efficiency in the entire system can be improved. As such, it is possible to provide an information management system capable of providing highly useful information while securing the reliability of information management, and improving the processing efficiency.

While the present invention has been described with reference to the above embodiments, the present invention is not limited to these embodiments, It will be understood by those of ordinary skill in the art that various changes in form and details may be made therein without departing from the spirit and scope of the present intention.

This application is based upon and claims the benefit of priority from Japanese patent application No. 2009-25519, filed on February 6, 2009, the disclosure of which is incorporated herein in its entirety by reference.

### INDUSTRIAL APPLICABILITY

The present invention is applicable to a system in which a plurality of devices on a network share personal information, and has industrial applicability.

### REFERENCE NUMERALS

- 1: authentication device
- 2: personal information requesting device
- 3: personal information providing device
- 4: privilege policy providing device
- 5: user terminal device
- 6: network
- 7: privilege policy providing device
- 11: user information
- 12: user privilege information
- 13: access judgment section
- 14: policy disclosure condition determination section
- 15: privilege policy certificate creation section
- 21: user access receiving section
- 22: access privilege requesting section
- 23: personal information requesting section
- 31: request receiving section
- 32: access judgment policy searching section
- 33: access judgment policy
- 34: privilege policy
- 35: access judgment policy developing section
- 36: privilege policy collecting section
- 37: access judgment section
- 38: personal information
- 39: information transmission section
- 41: privilege policy request receiving section
- 42: provision permission judgment section
- 43: privilege policy transmission section
- 44: privilege polity
- 45: privilege policy shaping section
- 70: user terminal
- 71: car rental website (personal information requesting device)
- 72: internet service provider (ISP, authentication device)
- 73: travel portal website (personal Information providing device)
- 74: airline frequent flier program (privilege policy providing device)
- 75: mobile carrier (privilege policy providing device)
- 100: web service provider (WSP)
- 101: web service consumes (WSC)
- 102: discovery service (DS)
- 103: user agent
- 104: personal information
- 105: access information
- 200: service providing devise
- 201: privilege assignee user terminal
- 202: privilege assignor user terminal
- 203: right management device
- 210: right acquisition section
- 220: right management section
- A: personal information requesting program
- B: personal information providing program
- C: privilege policy providing program
- D: authentication program

## Claims

1. An information management system, comprising:
an information providing device that provides stored information in response to a bequest from another device;
a privilege policy providing device that stores a privilege policy setting whether or not the stored information is allowed to be provided, and provides the privilege policy in response to a request from the information providing device; and
an authentication device that authenticates availability of information, wherein
the authentication device incudes privilege information management means for storing privilege information indicating whether or not the privilege policy is allowed be provided by the privilege policy providing device, and privilege certificate issuance means for issuing a privilege polity certificate including a content of the privilege information,
the information providing device includes privilege policy acquisition means for requesting the privilege policy providing device for the privilege policy based on the privilege policy certificate and acquiring the privilege policy and information providing means for providing stored information to another device based on the acquired privilege policy, and
the privilege policy providing device includes privilege policy providing means for providing the privilege policy to the information providing device based on the privilege policy certificate.

2. The information management system, according to Claim 1, further comprising
an information requesting device that requests the information providing device for information stored in the information providing device, wherein
the information requesting device acquires the privilege policy certificate from the authentication device, transmits the privilege policy certificate to the information providing device, and requests information stored in the information providing device,
the privilege certificate, issuance means included in the authentication device issues the privilege policy certificate to the information requesting device, and
the privilege policy acquisition means included in the information providing device requests the privilege policy providing device for the privilege policy, based on the requested content and the transmitted privilege policy certificate from the information requesting device.

3. The information management system according to Claim 1 or 2, wherein
the privilege certificate issuance means included in the authentication device issues the privilege policy certificate describing information limiting a type of the privilege policy provided by the privilege policy providing device.

4. The information management system, according to Claim 3, wherein
the privilege policy providing means included in the privilege policy providing device provides only the privilege policy of a limited type described in the privilege polity certificate, to the information providing devise.

5. The information management system, according any of Claims 1 to 4, wherein
the privilege information management means included in the authentication device stores the privilege information having a content corresponding to a content of the privilege policy stored in the privilege policy providing device.

6. The information management system, according to any of Claims 1 to 5, wherein
the privilege certificate issuance means included in the authentication device issues an access privilege certificate indicating availability of information from the information providing device by the other device, along with the privilege polity certificate.

7. An authentication device, comprising:
privilege information management means for storing privilege information indicating whether or not a privilege policy is allowed to he provided by a privilege policy providing device which stores the privilege policy setting whether or not stored information is allowed to be provided and provides the privilege policy in response to a request from an information providing device; and
privilege certificate issuance means for issuing a privilege policy certificate inclucing a content of the privilege information, the privilege policy certificate being referred to when the information providing device requests the privilege policy providing device for the privilege policy and when the privilege policy providing device provides the privilege policy to the information providing device.

8. The authentication device, according to Claim 7, wherein
the privilege certificate issuance means issues the privilege policy certificate describing information limiting a type of the privilege policy provided by the privilege policy providing device.

9. A program for an authentication device, the program causing an information processing device to realize:
privilege information management means for storing privilege information indicating whether or not a privilege policy is allowed to be provided by a privilege policy providing device which stores the privilege policy setting whether or not stored information is allowed to be provided and provides the privilege policy in response to a request from an information providing device; and
privilege certificate issuance means for issuing a privilege policy certificate including a content of the privilege information, the privilege policy certificate being referred to when the information providing device requests the privilege policy providing device for the privilege policy and when the privilege policy providing device provides the privilege policy to the information providing device.

10. The program for the authentication device, according to Claim 9, wherein
the privilege certificate issuance means issues the privilege policy certificate describing information limiting a type of the privilege policy provided by the privilege policy providing devise.

11. A privilege policy providing device, comprising
privilege policy providing means for storing a privilege policy setting whether or not stored information is allowed to be provided, and providing the privilege policy to an information providing device in response to a request from the information providing device which provides stored intonation in response to a request from another device, whereon
the privilege policy providing means provides the privilege policy to the information providing device based on a privilege policy certificate, the privilege policy certificate being issued by an authentication device which authenticates availability of information and including a content of privilege information indicating whether or not the privilege policy is allowed to be provided,

12. The privilege policy providing device, according to Claim 11, wherein
based on information limiting a type of the privilege polity described in the privilege policy certificate, the privilege policy providing means provides only the privilege policy of the limited type to the information providing device.

13. A grogram for a privilege policy providing device, the program causing an information processing device, which stores a privilege policy setting whether or not stored information is allowed to be provided, to realize
privilege policy providing means for providing the privilege policy to an information providing device in response to a request from the information providing device which provides stored information in response to a request from another device, wherein
the privilege policy providing means provides the privilege policy to the information providing device based on a privilege policy certificate, the privilege policy certificate being issued by an authentication device which authenticates availability of information and including a content of privilege information indicating whether or not the privilege policy is allowed to be provided.

14. The program for the privilege policy providing device, according to Claim 13, wherein
based on information limiting a type of the privilege policy described in the privilege policy certificate, the privilege policy providing means provides only the privilege policy of the limited type to the information providing device.

15. An information providing device, comprising:
information providing means for providing stored information in response to a request from another device; and
privilege policy acquisition means for requesting a privilege policy providing device for a privilege policy, the privilege policy providing device storing the privilege policy setting whether or not stored information is allowed to be provided and providing the privilege policy in response to a request from an information providing device, wherein
the privilege policy acquisition means requests the privilege policy providing device for the privilege policy to acquire the privilege policy based on a privilege policy certificate, the privilege polity certificate being issued by an authentication device which authenticates availability of information and including a content of privilege information indicating whether or not the privilege policy is allowed to be provided by the privilege policy providing device, and
the information providing means provides stored information to another device based on the privilege policy which is transmitted and acquired based on the privilege policy certificate from the privilege policy providing devise.

16. The information providing device, according to Claim 15, wherein
based on information limiting a type of the privilege policy described in the privilege policy certificate, the privilege policy acquisition means requests the privilege policy providing device only for the privilege policy of the limited type.

17. A program for an information providing device, the program causing an information processing device to realize:
information providing means for providing stored information in response to a request from anther device; and
privilege policy acquisition means for requesting a privilege policy providing device for a privilege policy, the privilege policy providing device storing the privilege policy setting whether or not stored information is allowed to be provided and providing the privilege policy in response to a request from an information providing device, wherein
the privilege policy acquisition means requests the privilege policy providing device for the privilege policy to acquire the privilege policy based on a privilege policy certificate, the privilege policy certificate being issued by an authentication device which authenticates availability of information and including a content of privilege information indicating whether or not the privilege policy is allowed to be provided by the privilege policy providing device, and
the information providing means provides stored information to another device based on the privilege policy which is transmitted and acquired from the privilege policy providing device based on the privilege policy certificate.

18. The program for the information providing device, according to Claim 17, wherein based on information limiting a type of the privilege policy described in the privilege policy certificate, the privilege policy acquisition means requests the privilege policy providing device only for the privilege policy of the limited type.

19. As information management method in an information providing system, the system including:
an information providing device that provides stored information in response to a request from another device;
a privilege policy providing device that stores a privilege policy setting whether or not the stored information is allowed to be provided, and provides the privilege policy in response to a request from the information providing device; and
an authentication device that authenticates availability of information,
the method comprising:
by the authentication device, storing privilege information indicating whether or not the privilege policy is allowed to be provided by the privilege policy providing device, and issuing a privilege policy certificate including a content of the privilege information;
by the information providing device, requesting the privilege policy providing device for the privilege policy based on the privilege policy certificate;
by the privilege policy providing device, providing the privilege policy to the information providing device based on the privilege policy certificate; and
by the information providing device, acquiring the privilege policy from the privilege policy providing device, and providing stored information to another device based on the acquired privilege policy.

20. The information management method, according to Claim 19, wherein
the issuing the privilege policy certificate by the authentication device includes issuing the privilege policy certificate describing information limiting a type of the privilege policy provided by the privilege policy providing device, and
the providing the privilege policy to the Information providing device by the privilege policy providing device includes providing only the privilege policy of the limited type described in the privilege policy certificate.
